# EUROPEAN PATENT SPECIFICATION

(11) **EP 3 624 315 B1**
(45) Date of publication and mention of the grant of the patent: **24.03.2021**
(21) Application number: 18193832.5
(22) Date of filing: 11.09.2018
(51) Int. Cl.: H02K 15/095, H01F 41/088

(54) **FLYER WINDING MACHINE FOR INTERNAL STATORS OF BRUSHLESS MOTORS**
FLYER-WICKELMASCHINE FÜR INNENSTATOREN VON BÜRSTENLOSEN MOTOREN
MACHINE D'ENROULEMENT PAR AILETTE POUR STATORS INTERNES DE MOTEURS SANS BALAIS

(43) Date of publication of application: 18.03.2020
(73) Proprietor: Nortech System SA, 6828 Balerna (CH)
(72) Inventor: RIVARA, Antonio, 6828 Balerna (CH)
(74) Representative: M. Zardi & Co S.A.

(56) References cited:
- EP-A1- 1 278 292
- EP-A1- 1 324 471
- EP-A1- 1 387 470
- EP-A2- 2 732 454

## Description

### Field of application

The invention relates to the sector of electric coil winding machines. More specifically, the invention relates to a flyer or rotating arc winding machine which is suitable for winding the electrical phases of internal stators of brushless stepper motors with conducting wire for example made of copper or aluminium.

### Prior art

The prior art of electric coil winding machines comprises the needle systems and the flyer systems. Both said systems are well-known.

A needle machine comprises a conducting wire dispensing member, named needle, of an elongated form and having a forwards and backwards alternating movement to form the desired turns of conducting wire. A needle machine allows a very precise guidance of the wire and may operate in restricted spaces. For example it has the advantage that it can be used also on inwardly directed pole shoes (external stators) where the needle can enter from above, but has the disadvantage that it is relatively slow and requires a mechanical member with an alternate movement with the resultant inertial stress.

A flyer machine comprises a wire dispensing member which rotates about the winding support. The turns forming the electrical winding are formed as a result of rotation of said member and, therefore, a flyer machine is intrinsically very fast in producing the winding; it has, however, the drawback of guiding the wire in a less precise manner compared to needle machines.

The winding support has generally a rectangular cross-section and in this case the wire must be ideally wound around a rectangle. An embodiment is known where the flyer machine comprises a wire conveyor device which however retains the wire only on two sides of said rectangle. This solution consequently does not offer a solution to the problem.

In particular, a disadvantage of flyer machines consists in the distance between the wire dispensing point and the winding support. There is a relatively long section of wire which is situated in the air and is difficult to control. In such conditions it is difficult to maintain the correct arrangement of the turns of conducting wire and wire crossings may occur.

It should be noted that an imperfect arrangement of the turns reduces the filling factor of the winding and consequently affects the performance of the motor. An electrical winding comprises several layers of conducting wire deposited one above the other and the flyer machines of the prior art may not always achieve a correct stratification of the wire. For example the wire may be arranged diagonally in an undesirable manner.

The disadvantage which arises from a non-optimum stratification is a variation of the ohmic resistance values and a considerable increase in the winding volume for a given weight of conducting material; said conducting material is distributed in a less compact and therefore less efficient manner from the point of view of electromagnet performance.

A typical field of application of flyer machines which is of particular interest is the realization of internal stator windings of brushless motors. The term internal stator denotes a stator of a brushless electric motor intended to be mounted in an internal coaxial position relative to the rotor.

An internal stator is typically formed with layers of cut and assembled magnetic laminations which have a series of T-shaped segments comprising in turn a core on which the conducting wire is wound, and the head of the T which contains the winding towards the outside of the stator diameter.

The core generally has a rectangular cross-section. Only a small gap is present between the heads of two adjacent segments for insertion of the conducting wire dispensed by the flyer. Said insertion gap is slightly wider than the wire itself; in some cases, for example, the gap has a size the same as or smaller than the diameter of the wire multiplied by a factor of 2 or 3.

In the conditions described above it is difficult to combine speed of formation of the turns and precise guiding and control of the deposition pitch of the conducting wire. In particular it is difficult to form superimposed layers of conducting wire while maintaining the correct stratified arrangement of the wire and preventing crossing.

Prior art flyer-type devices for winding cores of electrical machines are disclosed in EP 1 387 470; WO 2013/008183; EP 1 278 292; EP 1 324 471.

### Summary of the invention

The invention aims to overcome the limitations and drawbacks of the prior art which have been illustrated above. The invention in particulars aims to improve the technology of flyer winding machines. One of the objects of the invention is to improve the precision of the guidance of the conducting wire in this type of winding machine. In particular one of the goals of the invention is to correctly stratify the winding, avoiding or reducing wire crossing to a minimum. Another object is to improve the filling factor of windings obtainable with a flyer machine. Another object is to combine the aforementioned advantages with a high winding speed.

The objects are achieved with a coil winding machine according to claim 1.

Said machine is of the type comprising a rotating member named "flyer" for feeding a conducting wire. The flyer comprises a wire dispenser arranged to rotate about a winding support to wind turns of conducting wire on said support.

The winding machine according to the invention includes a wire-guiding device wherein:
said wire-guiding device comprises a first front guiding element and a second front guiding element which form a non-rotating wire-guiding head facing said support;
said wire-guiding head has a substantially frusto-pyramidal side surface and a closed front frame which defines a front opening;
the first front guiding element is slidable relative to a body of the wire-guiding device in a first direction with a first adjustment travel path, and the second front guiding element is slidable relative to said body in a second direction with a second adjustment travel path, said first direction and second direction converging towards the winding support;
the wire-guiding device comprises at least one control system adapted to modifying the position of said front guiding elements along the respective adjustment travel paths into a plurality of positions ranging between a first position of maximum distance and a second position of maximum approach, consequently varying the geometry of the wire-guiding head, and said front guiding elements are configured to partially superimpose one another.

The wire-guiding head has a variable geometry owing to the fact that the two front guiding elements can move along said converging directions. The head expands or contracts depending on the position of the two front guiding elements. The first position of maximum distance provides a "open" head geometry (fully expanded); The second position of maximum approach provides a "closed" head geometry (fully contracted). The width of the front opening also varies as a consequence. In a preferred embodiment, said front guiding elements have a substantially a mirror-image shape and are staggered.

Preferably the front guiding elements are slidable in a continuous manner along the respective adjustment travel paths.

Said control system is preferably configured to displace the front guiding elements in a synchronized manner while keeping said two elements equidistant from a plane passing along the centre line of the wire-guiding head.

The frusto-pyramidal side surface of the wire-guiding head may comprise a plurality of faces converging towards the front frame. The faces may belong to anyone of the guiding elements or may be formed by a partial superimposition thereof.

In a preferred embodiment, each of said front elements has a C-shaped front edge and inclined faces which extend from the legs of said C-shaped edge.

The front frame of the wire-guiding head is preferably rectangular or essentially rectangular.

In a preferred embodiment, the body of the wire-guiding device is also movable in the direction of the axis of rotation of the flyer to allow a further degree of freedom of movement of the wire-guiding head towards or away from the winding support.

Another aspect of the invention relates to a method for forming a winding of conducting wire on a support, in particular on a segment of an internal stator of an electric motor, according to the claims.

The advantages of the invention are essentially the following:
The wire-guiding head has the function of a layering device which controls the configuration of the wound turns. The wire-guiding head allows the formation of various layers of the winding with accurate control of the position of the turns of wire owing to its variable geometry. The variable configuration feature renders the wire-guiding head able to maintain a constant closed and continuous frame for supporting the wire. Said frame allows continuous adaptation of the wire to the winding arrangement which is gradually formed on the support. In this way the wound turns are created in the desired position with a high degree of precision.

Said frame has a preferably rectangular or substantially rectangular shape; in particular embodiments it may have a square or substantially square shape.

The frusto-pyramidal surface forms a guiding slide for the conducting wire and the front frame provides a support plane for the wire, allowing precise control of the shape of the turn of conducting wire in the space around the lamination segment or winding support. Said precision is achieved despite the distance from the wire dispensing point which is located on the flyer, with the major advantage of avoiding with certainty a diagonal arrangement of the wire on the two long sides of the winding support or segment.

Owing to the variable configuration feature, the wire-guiding head may be inserted for example into the narrow spaces between the segments of a stator when it is in the open position; thereafter said head may be arranged in a suitable geometry depending on the diameter of the wire from which the wound turns are formed. In particular, the wire-guiding head may be arranged in a geometry where the front frame is situated around and close to the winding support so as to guide the wire efficiently. The front opening of the wire-guiding head may receive the head of the segment allowing positioning the wire-guiding head, particularly its front frame, exactly in the winding zone.

Owing to the wire being supported on the head, in particular on its front frame, the risk of wire crossings is reduced and the filling factor is improved, since it is always possible to ensure the desired tangency of the edge of said frame (which is advantageously rectangular) with the turn being formed.

A particularly preferred application of the invention consists of the winding of internal stators for brushless motors. The machine according to the invention may operate at the high speeds which are typical of flyer machines, for example about 60 wound turns per second, with a layering precision superior to that of the machines of the prior art.

The advantages of the invention will become clearer with the aid of the following description relating to a preferred embodiment.

### Brief description of the figures

Fig. 1 shows some components of a flyer machine according to the invention, with the wire-guiding head in a first "open head" condition;
Fig. 2 shows the components of Fig. 1, with the wire-guiding head in a second "closed head" condition;
Fig. 3 shows a cross-section through the main components of the wire-guiding device and also shows a stator support where winding is performed;
Figs. 4 and 5 show the front guiding elements which form the wire-guiding head;
Figs. 6 and 7 show in schematic form the wire-guiding head in two working positions relative to a stator support;
Figs. 8 and 9 show a cross-sectional view of operation of a mechanical control system for varying the geometry of the wire-guiding head.

### Detailed description

The figures show the following details/parts:
- 1:: Flyer
- A-A:: axis of rotation of the flyer 1
- 2:: Wire output nozzle of the flyer 1
- 3:: Internal stator on which winding is performed
- 4:: Support flange of the stator 3
- 5:: Wire-guiding device
- 6, 7:: Front wire-guiding elements
- 8:: Wire-guiding head
- 9,10:: Fixing slides for the elements 6 and 7
- 11,12:: Support plates for the slides 9,10
- 13:: Front edge of the first front element 6
- 13a-13c:: Legs of the edge 13
- 14-16:: Faces of the first front element 6
- 17:: Front edge of the second front element 7
- 17a-17c:: legs of the edge 17
- 18-20:: Faces of the second front element 7
- 21:: Frusto-pyramidal surface of the wire-guiding head 8
- 22:: Front frame of the wire-guiding head 8
- 23:: Front opening of the wire-guiding head 8
- 30:: Segment of the stator 3
- 31:: Body of a stator segment
- 32:: Head of a stator segment
- 33:: Insertion gap between segments
- 34:: Ferromagnetic core of the stator
- 35:: Insulating coating of the core 34
- 36:: Conducting wire winding
- 37:: Actuating shaft for adjusting the configuration of the wire-guiding head 8
- 38:: Body of the wire-guiding device 5
- 39:: Head of the shaft 37
- 40:: Bearing
- 41:: Bearing for rotation of the flyer
- *r₁*, *r₂*:: directions of movement of the slides 9 and 10 relative to the plates 11, 12
- B-B:: Centre plane of the wire-guiding head 8

The figures show a coil winding machine which comprises a flyer 1 rotating about an axis A-A. The flyer 1 comprises a nozzle 2 for dispensing a conducting wire.

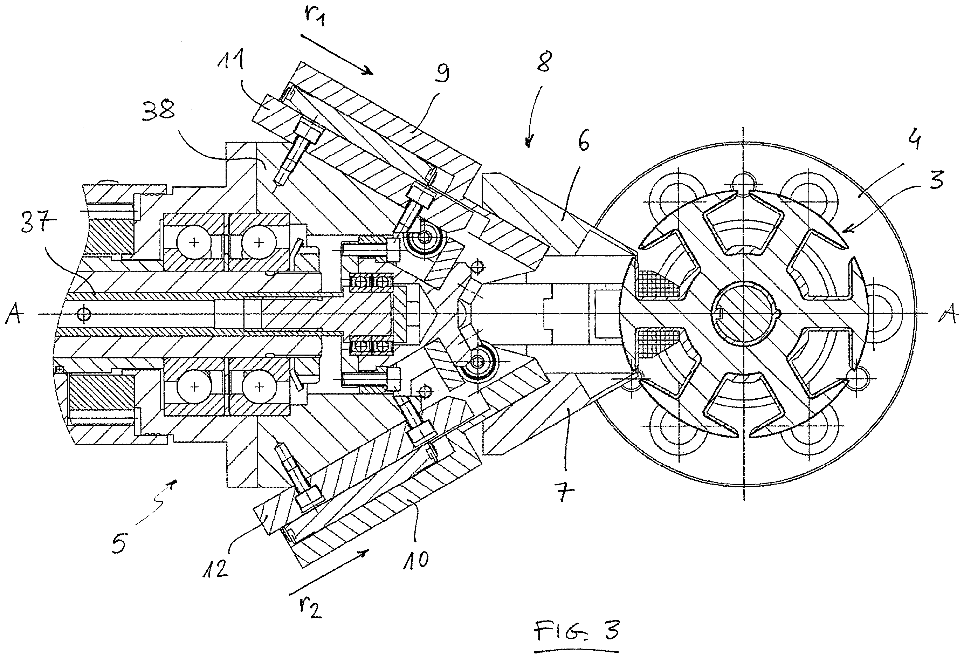

The flyer 1 rotates about a winding support intended to receive the wound conducting wire. For example Fig. 3 shows an internal stator 3 fixed to a flange 4.

The machine is equipped with a non-rotating wire-guiding device denoted overall by the reference number 5.

Said wire-guiding device 5 comprises a first front guiding element 6 and a second front guiding element 7 which in the example have substantially the shape of two frusto-pyramidal shells and which form a wire-guiding head 8. Said wire-guiding head 8 faces the stator 3, i.e. the wire winding zone.

It should be noted that the two front guiding elements and consequently also the wire-guiding head 8 do not rotate, unlike the flyer.

The front guiding elements 6 and 7 are associated with a body 38 of the wire-guiding device 5 in a slidable manner with respect to converging directions *r₁* and *r₂*.

In greater detail the first front guiding element 6 is fixed to a first slide 9 and the second front guiding element 7 is fixed to a second slide 10 (Fig. 3). The slide 9 is slidable linearly relative to a plate 11 in a first adjustment direction *r₁*; the slide 10 is slidable linearly relative to a plate 12 in a second adjustment direction *r₂*. The directions *r₁* and *r₂* converge towards the stator 3. The plates 11 and 12 are fixed to the body 38.

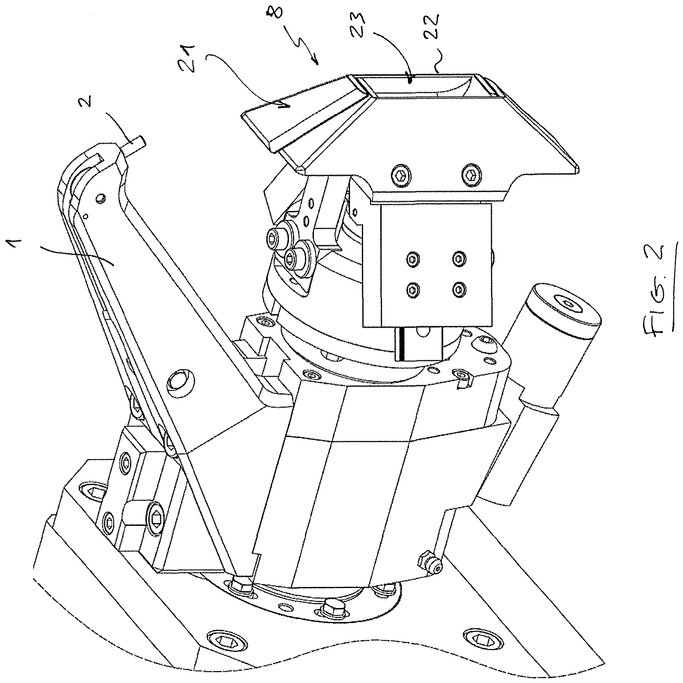

The front guiding elements 6 and 7 have a substantially mirror shape and are staggered so that they can be superimposed as seen in Fig. 2.

Owing to the degree of freedom of the slides 9 and 10 relative to the plates 11 and 12 (slider constraint), the two front elements 6 and 7 may assume different positions along a predetermined travel path, between a first position of relative spacing away and a second position where they are close together and partially superimposed.

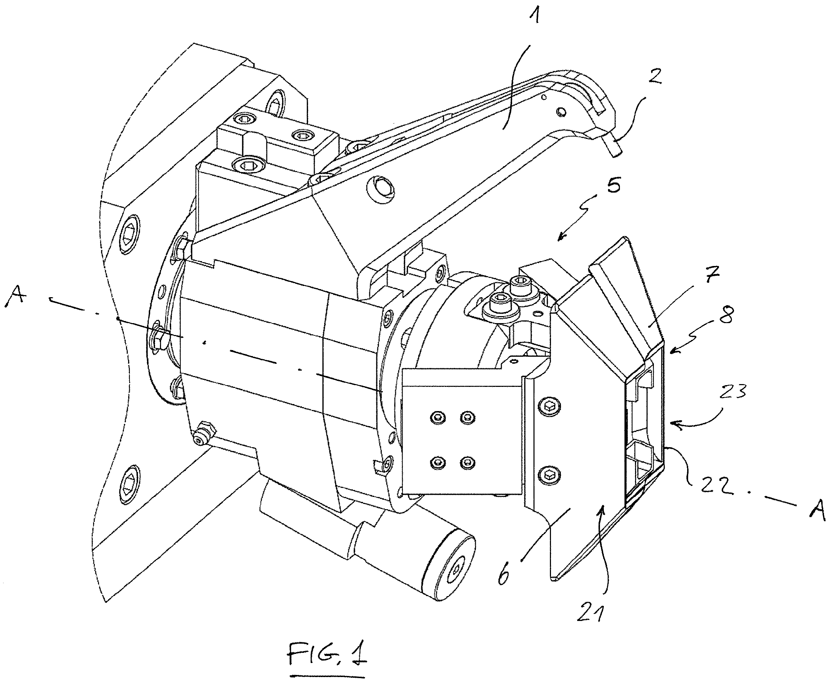

The position of the elements 6 and 7 modifies consequently the geometry of the wire-guiding head 8 which expands or contracts widthwise. Fig. 1 shows the wire-guiding head 8 in a first condition which may be termed open, where the elements 6 and 7 are at a maximum distance; Fig. 2 shows the wire-guiding head 8 in a second condition which may be termed closed, where the elements 6 and 7 are at a minimum distance and are partially superimposed.

The position of the front guiding elements 6 and 7 is controlled by a control system which is configured to move said elements in a synchronized manner, keeping the two bodies equidistant from a mid-plane passing along the axis B-B.

In the example shown in the figures, said control system comprises a shaft 37 which is movable forwards and backwards in the direction of the axis of rotation A-A of the flyer 1. For example said shaft 37 is coaxial with a rotating body which operates the flyer 1.

The forwards or backwards movement of said shaft 37 causes the elements 6 and 7 to advance or retract along the directions *r₁* and *r₂*. The control system also comprises suitable kinematic constraining means which keep the elements 6 and 7 in a symmetrical position relative to a centre plane of the wire-guiding head 8 passing along the axis A-A (perpendicular to the plane in Fig. 3).

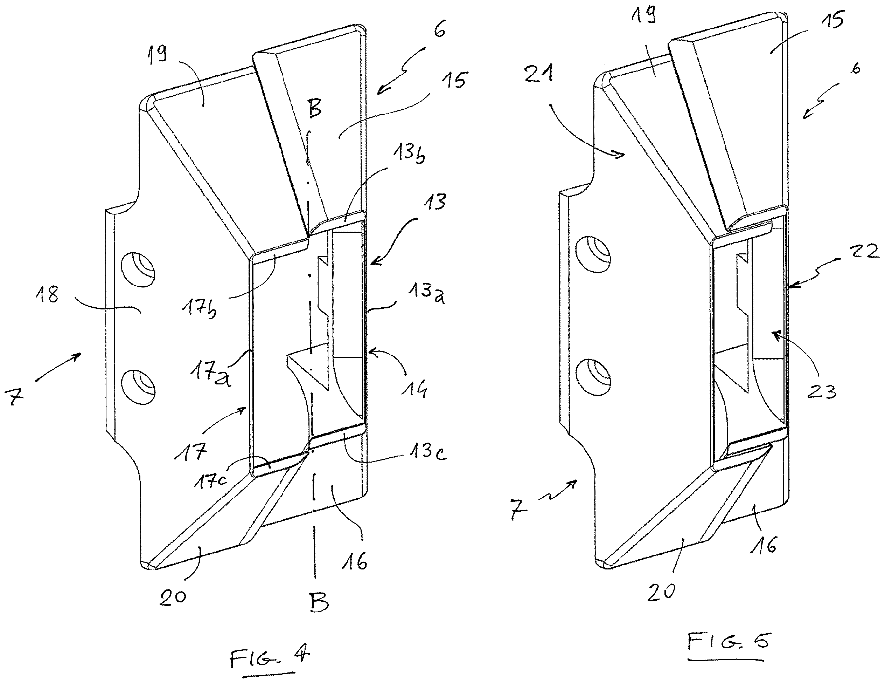

The figures show a preferred embodiment of the front elements 6 and 7 which is described with reference to Fig. 4 and Fig. 5.

The first front guiding element 6 has a C-shaped front edge 13, a side face 14, a top face 15 and a bottom face 16. The faces 14, 15 and 16 converge towards respective legs 13a, 13b and 13c of the front edge 13.

The second front guiding element 7 has a shape which is essentially a mirror image of the first element 6 and comprises a C-shaped front edge 17, a side face 18, a top face 19 and a bottom face 20. The faces converge towards the respective legs 17a, 17b and 17c of said edge 17.

The elements 6 and 7 are staggered so that they can approach and superimpose as shown in Fig. 5. In particular it can be seen that the face 15 of the first element 6 partially superimposes on the face 19 of the second element 7; similarly, on the opposite side, the face 20 partially superimposes on the face 16.

It can be seen from the Figures that the faces 14, 15, 16 and 18, 19, 20 form together a frusto-pyramidal side surface 21 of the wire-guiding head 8. The two C-shaped edges 13 and 17, approaching in a mirror-like arrangement, form a substantially rectangular frame 22 which defines the front opening or mouth 23 of the wire-guiding head 8 (Fig. 5).

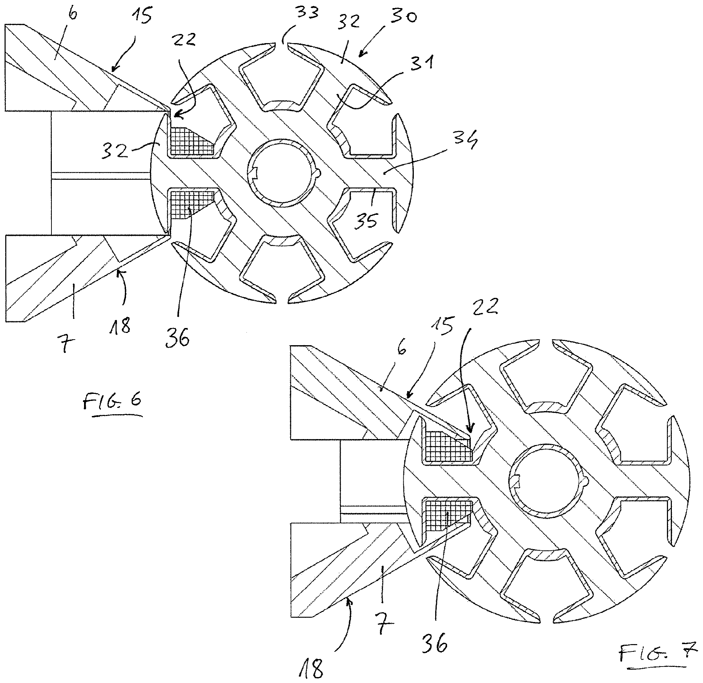

Figs. 6 and 7 show the working position of the wire-guiding head 8 in relation to the stator 3.

The stator 3 comprises a plurality of segments (pole shoes) 30, each with a body 31 and a head 32. The heads 32 of two adjacent segments are separated by spaces 33. The conducting wire must be wound around the body 31, forming a series of superimposed turns. Said body 31 for example has a rectangular cross-section.

The stator 3 comprises a core 34 made of ferromagnetic material and a coating 35 of insulating material, for example a plastic material. The coating 35 is for example obtained using an injection process.

Fig. 6 shows a step of moving the wire-guiding head 8 towards the stator 3. The wire-guiding head 8 is in an open position and the edges 13 and 17 of the front guiding elements 6 and 7 can pass through the two gaps 33 on the sides of one of the segments 30 so that the wire-guiding head 8 is arranged around the segment, with the bodies 6 and 7 on the opposite sides of the segment 30, and the segment 30 is received through the front mouth 22 of the wire-guiding head 8.

Fig. 7 shows the wire-guiding head 8 in another working position and in a closed condition where the front guiding elements 6 and 7 are close together and the frame 21 is situated around and close to the winding 36.

In the condition shown in Fig. 7 the wire-guiding head 8 maintains an essentially rectangular form of the wound turns of conducting wire, owing to the support surface formed by the frame 21, while the wire is fed continuously by the rotation of the flyer 1. The wound turn is thus kept in the correct rectangular shape while the winding 36 is formed, preventing deformations of the wound turn.

In particular, it should be noted that the edge of said frame 21 remains tangential to the wound turn during formation, preventing non-optimum deposition of the wire, for example diagonally.

Moreover, it can be understood that the wire-guiding head 8, owing to its variable geometry, may adapt continuously to the position of the wound turns on the winding. The wire-guiding head 8 in other words, owing to suitable movements of the elements 6 and 7 which open and close, maintains an optimum geometry both during formation of the wound turns closer to the centre of the stator 3 (as shown in Fig. 7) and during the formation of the wound turns further away from the centre. In other words, the head 8 dynamically adapts to the winding formation process.

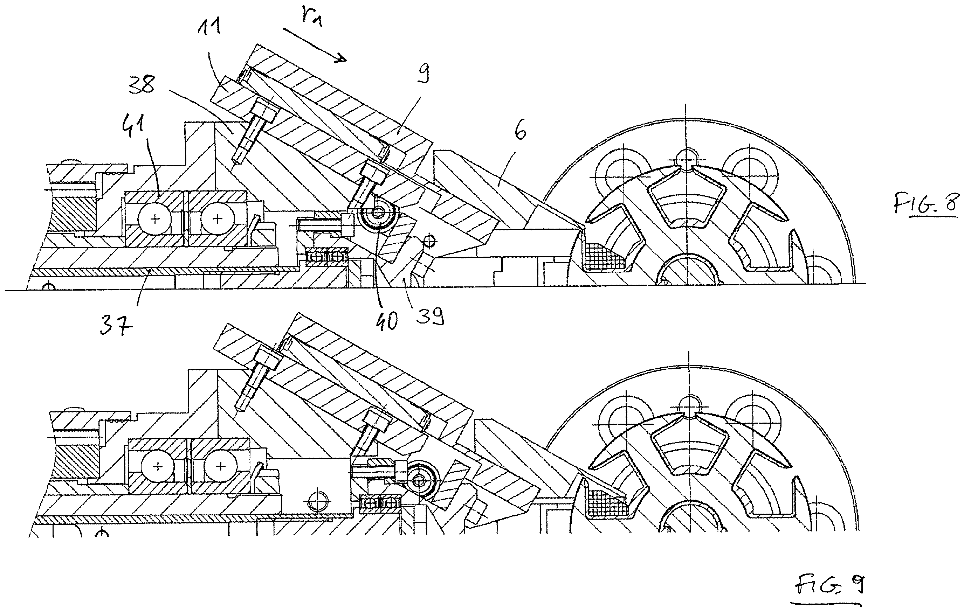

Figs. 8 and 9 show some details of a preferred embodiment of the system for mechanical control of the wire-guiding head 8 by means of the aforementioned shaft 37.

When the shaft 37 is in the retracted position (Fig. 8), the wire-guiding head 8 is in the open condition with the elements 6 and 7 spaced. When the shaft 37 is in the advanced position (Fig. 9), the wire-guiding head 8 is in the closed position with the elements 6 and 7 close together and superimposed.

The shaft 37 terminates with a head 39. The slide 9 which carries the guiding element 6 is coupled together with said head 39 by means of a bearing 40 which allows sliding in a direction perpendicular to the direction *r₁*. The slide 9 is forced to slide linearly along said direction *r₁* relative to the plate 11. The latter is fixed to the body 38.

As a result of the constraints, the forwards displacement of the shaft 37 and the associated head 39 pushes the slide 9 and the first front guiding element 6 forwards along the direction *r₁*. Similarly the same shaft 37 operates the second front guiding element 7, which moves in synchronism with the front body 6, ensuring the symmetry of the wire-guiding head 8.

The figures also show the bearings 41 which allow rotation of the flyer 1.

The invention achieves the aforementioned objects since it allows the speed of the flyer machine to be combined with a high degree of precision during the stratified arrangement of the wound turns.

## Claims

1. Coil winding machine comprising a rotating member named flyer (1) for feeding a conducting wire, the flyer (1) comprising a wire dispenser (2) arranged to rotate about a winding support (3) to wind turns of conducting wire onto said support (3), the winding machine comprises a wire-guiding device (5), wherein:
said wire-guiding device (5) comprises a first front guiding element (6) and a second front guiding element (7) which form a non-rotating wire-guiding head (8) facing said support (3);
said wire-guiding head (8) has a substantially frusto-pyramidal side surface (21) and a closed front frame (22) which defines a front opening (23);
the first front guiding element (6) is slidable relative to a body (38) of the wire-guiding device (5) in a first direction (*r₁*) with a first adjustment travel path and
the second front guiding element (7) is slidable relative to said body (38) in a second direction (*r₂*) with a second adjustment travel path, said first direction and second direction (*r₁*, *r₂*) converging towards the winding support (3);
the wire-guiding device (5) comprises at least one control system (37) adapted to modify the position of said front guiding elements along the respective adjustment travel paths into a plurality of positions ranging between a first position of maximum distance and a second position of maximum approach, thus varying the geometry of the wire-guiding head (8),
**characterized in that** said front guiding elements are configured to partially superimpose one another.

2. Machine according to claim 1, wherein said frame (22) has a rectangular or substantially rectangular shape.

3. Machine according to any one of the preceding claims, wherein said front guiding elements are slidable in a continuous manner along the respective adjustment travel paths.

4. Machine according to any one of the preceding claims, wherein said control system is configured to displace the front guiding elements (6, 7) in a synchronized manner while keeping said two elements equidistant from a plane passing along the centre line (B-B) of the wire-guiding head (8).

5. Machine according to any one of the preceding claims, wherein said frusto-pyramidal side surface (21) of the wire-guiding head (8) comprises a plurality of faces converging towards the front frame (22).

6. Machine according to claim 5, wherein said side surface (21) of the wire-guiding head comprises at least:
a first side face (14) which belongs to the first front guiding element (6);
a second side face (18), which belongs to the second front guiding element (7) and is situated opposite said first side face (14);
a top surface and a bottom surface which result from the approach and/or the partial superimposition of top faces (15, 19) and bottom faces (16, 20) of the first and second front elements.

7. Machine according to any one of the preceding claims, wherein the first front guiding element (6) and the second front guiding element (7) have a shape which is substantially a mirror image of each other.

8. Machine according to claim 7, wherein said front guiding elements (6, 7) are staggered to allow their partial superimposition.

9. Machine according to any one of the preceding claims, wherein each of said front guiding elements (6, 7) has a C-shaped front edge (13, 17) and inclined faces which extend from the legs of said C-shaped edge.

10. Machine according to any one of the preceding claims, wherein said front frame (22) of the wire-guiding head (8) is rectangular or essentially rectangular.

11. Machine according to any one of the preceding claims, wherein: said body (38) of the wire-guiding device (5) is movable in the direction of the axis of rotation of the flyer to allow a degree of freedom of movement of the wire-guiding head (8) towards or away from the winding support (3).

12. A method for forming a winding of conducting wire on a support (3), in particular on a segment of an internal stator of an electric motor, wherein the method is implemented with a flyer winding machine according to any one of the preceding claims, and the method comprises the steps of:
moving the wire-guiding head (8) of the winding machine towards the support, said support being received through the front opening (23) of the wire-guiding head (8), the two front guiding elements being thus arranged on the sides of the support, and
forming the turns of the winding by adjusting the position of the front guiding elements so as to position the front frame (22) of the wire-guiding head around the desired zone for formation of the winding.

## Patentansprüche

1. Spulenwickelmaschine, die ein drehbares Element, genannt Flyer (1), zum Zuführen eines Leitdrahtes umfasst, wobei der Flyer (1) einen Drahtspender (2) umfasst, der angeordnet ist, um sich um einen Wickelträger (3) zu drehen, um Windungen des leitenden Drahtes auf den Träger (3) zu wickeln, wobei die Wickelmaschine eine Drahtführungsvorrichtung (5) umfasst, wobei:
die Drahtführungsvorrichtung (5) ein erstes vorderes Führungselement (6) und
ein zweites vorderes Führungselement (7) umfasst, die einen nicht drehbaren Drahtführungskopf (8) bilden, der dem Träger (3) zugewandt ist;
der Drahtführungskopf (8) eine im Wesentlichen kegelstumpfförmige Seitenfläche (21) und einen geschlossenen vorderen Rahmen (22) aufweist, der eine vordere Öffnung (23) definiert;
das erste vordere Führungselement (6) relativ zu einem Körper (38) der Drahtführungsvorrichtung (5) in einer ersten Richtung (n) mit einem ersten Verstellweg verschiebbar ist und das zweite vordere Führungselement (7) relativ zu dem Körper (38) in einer zweiten Richtung (r2) mit einem zweiten Verstellweg verschiebbar ist, wobei die erste Richtung und die zweite Richtung (r1, r2) in Richtung der Wickelauflage (3) konvergieren;
die Drahtführungsvorrichtung (5) mindestens ein Steuersystem (37) umfasst,
das angepasst ist, um die Position der vorderen Führungselemente entlang der jeweiligen Verstellwege in eine Vielzahl von Positionen zu modifizieren, die zwischen einer ersten Position maximalen Abstands und einer zweiten Position maximaler Annäherung liegen, wodurch die Geometrie des Drahtführungskopfes (8) variiert ist,
**dadurch gekennzeichnet, dass** die vorderen Führungselemente konfiguriert sind, um einander teilweise zu überlagern.

2. Maschine nach Anspruch 1, wobei der Rahmen (22) eine rechteckige oder im Wesentlichen rechteckige Form aufweist.

3. Maschine nach einem der vorherigen Ansprüche, wobei die vorderen Führungselemente kontinuierlich entlang der jeweiligen Verstellwege verschiebbar sind.

4. Maschine nach einem der vorherigen Ansprüche, wobei das Steuersystem konfiguriert ist, um die vorderen Führungselemente (6, 7) in einer synchronisierten Weise zu verschieben, während die beiden Elemente in gleichem Abstand zu einer Ebene gehalten sind, die entlang der Mittellinie (B-B) des Drahtführungskopfes (8) verläuft.

5. Maschine nach einem der vorherigen Ansprüche, wobei die kegelstumpfförmige Seitenfläche (21) des Drahtführungskopfes (8) eine Vielzahl von Flächen aufweist, die zum vorderen Rahmen (22) hin konvergieren.

6. Maschine nach Anspruch 5, wobei die Seitenfläche (21) des Drahtführungskopfes mindestens umfasst:
eine erste Seitenfläche (14), die zu dem ersten vorderen Führungselement (6) gehört;
eine zweite Seitenfläche (18), die zu dem zweiten vorderen Führungselement (7) gehört und der ersten Seitenfläche (14) gegenüberliegt;
eine obere Fläche und eine untere Fläche, die sich aus der Annäherung und/oder der teilweisen Überlagerung von oberen Flächen (15, 19) und unteren Flächen (16, 20) des ersten und zweiten vorderen Elements ergeben.

7. Maschine nach einem der vorherigen Ansprüche, wobei das erste vordere Führungselement (6) und das zweite vordere Führungselement (7) eine Form aufweisen, die im Wesentlichen ein Spiegelbild voneinander ist.

8. Maschine nach Anspruch 7, wobei die vorderen Führungselemente (6, 7) versetzt angeordnet sind, um deren teilweise Überlagerung zu ermöglichen.

9. Maschine nach einem der vorherigen Ansprüche, wobei jedes der vorderen Führungselemente (6, 7) eine C-förmige Vorderkante (13, 17) und schräge Flächen aufweist, die sich von den Schenkeln der C-förmigen Kante erstrecken.

10. Maschine nach einem der vorherigen Ansprüche, wobei der vordere Rahmen (22) des Drahtführungskopfes (8) rechteckig oder im Wesentlichen rechteckig ist.

11. Maschine nach einem der vorherigen Ansprüche, wobei: der Körper (38) der Drahtführungsvorrichtung (5) in Richtung der Drehachse des Flyers beweglich ist, um einen Freiheitsgrad der Bewegung des Drahtführungskopfes (8) auf den Wickelträger (3) zu oder von ihm weg zu ermöglichen.

12. Ein Verfahren zum Bilden einer Wicklung aus Leitdraht auf einem Träger (3), insbesondere auf einem Segment eines internen Stators eines Elektromotors, wobei das Verfahren mittels einer Flyer-Wickelmaschine nach einem der vorhergehenden Ansprüche durchgeführt ist, und das Verfahren die folgenden Schritte umfasst:
Bewegen des Drahtführungskopfes (8) der Wickelmaschine in Richtung des Trägers, wobei der Träger durch die vordere Öffnung (23) des Drahtführungskopfes (8) aufgenommen ist, wobei die beiden vorderen Führungselemente somit an den Seiten des Trägers angeordnet sind, und
Bilden der Windungen der Wicklung durch Einstellen der Position der vorderen Führungselemente, um den vorderen Rahmen (22) des Drahtführungskopfes um die gewünschte Zone für die Bildung der Wicklung zu positionieren.

## Revendications

1. Bobineuse comprenant un organe de rotation appelé ailette (1) destiné à fournir un fil conducteur, l'ailette (1) comprenant un distributeur de fil (2) prévu pour tourner autour d'un support de bobinage (3) afin d'enrouler des tours de fil conducteur sur ledit support (3), la bobineuse comprenant un dispositif de guidage de fil (5), où :
ledit dispositif de guidage de fil (5) comprend un premier élément de guidage avant (6) et un second élément de guidage avant (7) qui forment une tête de guidage de fil non rotative (8) qui fait face audit support (3) ;
ladite tête de guidage de fil (8) possède une surface latérale sensiblement tronpyramidale (21) et un cadre avant fermé (22) qui définit une ouverture avant (23) ;
le premier élément de guidage avant (6) peut coulisser par rapport à un corps (38) du dispositif de guidage de fil (5) dans une première direction (*r₁*) avec un premier trajet de déplacement de réglage, et le second élément de guidage avant (7) peut coulisser par rapport audit corps (38) dans une seconde direction (*r₂*) avec un second trajet de déplacement de réglage, ladite première direction et la seconde direction (*r₁*, *r₂*) convergeant vers le support de bobinage (3) ;
le dispositif de guidage de fil (5) comprend au moins un système de commande (37) adapté pour modifier la position desdits éléments de guidage avant le long des trajets de déplacement de réglage respectifs en une pluralité de positions comprises entre une première position de distance maximale et une seconde position d'approche maximale, afin de faire varier la géométrie de la tête de guidage de fil (8),
**caractérisée en ce que** lesdits éléments de guidage avant sont configurés pour se superposer partiellement.

2. Bobineuse selon la revendication 1, dans laquelle ledit cadre (22) possède une forme rectangulaire ou sensiblement rectangulaire.

3. Bobineuse selon l'une quelconque des revendications précédentes, dans laquelle lesdits éléments de guidage avant peuvent coulisser de manière continue le long des trajets de déplacement de réglage respectifs.

4. Bobineuse selon l'une quelconque des revendications précédentes, dans laquelle ledit système de commande est configuré pour déplacer les éléments de guidage avant (6, 7) de manière synchronisée tout en maintenant lesdits deux éléments équidistants par rapport à un plan qui passe le long de la ligne centrale (B-B) de la tête de guidage de fil (8).

5. Bobineuse selon l'une quelconque des revendications précédentes, dans laquelle ladite surface latérale tronpyramidale (21) de la tête de guidage de fil (8) comprend une pluralité de faces qui convergent vers le cadre avant (22).

6. Bobineuse selon la revendication 5, dans laquelle ladite surface latérale (21) de la tête de guidage de fil comprend au moins :
une première face latérale (14) qui appartient au premier élément de guidage avant (6) ;
une seconde face latérale (18), qui appartient au second élément de guidage avant (7) et est située de manière opposée à ladite première face latérale (14) ;
une surface supérieure et une surface inférieure qui résultent de l'approche et/ou de la superposition partielle des faces supérieures (15, 19) et des faces inférieures (16, 20) des premier et second éléments avant.

7. Bobineuse selon l'une quelconque des revendications précédentes, dans laquelle le premier élément de guidage avant (6) et le second élément de guidage avant (7) possèdent une forme qui est sensiblement une image miroir de l'un et de l'autre.

8. Bobineuse selon la revendication 7, dans laquelle lesdits éléments de guidage avant (6, 7) sont décalés afin de permettre leur superposition partielle.

9. Bobineuse selon l'une quelconque des revendications précédentes, dans laquelle chacun desdits éléments de guidage avant (6, 7) possède un bord avant en forme de C (13, 17) et des faces inclinées qui s'étendent depuis les pieds dudit bord en forme de C.

10. Bobineuse selon l'une quelconque des revendications précédentes, dans laquelle ledit cadre avant (22) de la tête de guidage de fil (8) est rectangulaire ou quasiment rectangulaire.

11. Bobineuse selon l'une quelconque des revendications précédentes, dans laquelle : ledit corps (38) du dispositif de guidage de fil (5) est mobile dans la direction de l'axe de rotation de l'ailette afin de permettre un degré de liberté de mouvement de la tête de guidage de fil (8) vers ou à l'écart du support de bobinage (3).

12. Procédé de formation d'un bobinage de fil conducteur sur un support (3), en particulier sur un segment d'un stator interne d'un moteur électrique, où le procédé est exécuté avec une bobineuse à ailette selon l'une quelconque des revendications précédentes, et le procédé comprend les étapes consistant à :
déplacer la tête de guidage de fil (8) de la bobineuse vers le support, ledit support étant reçu dans l'ouverture avant (23) de la tête de guidage de fil (8), les deux éléments de guidage avant étant ainsi prévus sur les côtés du support, et
former les tours du bobinage en ajustant la position des éléments de guidage avant de façon à positionner le cadre avant (22) de la tête de guidage de fil autour de la zone souhaitée pour la formation du bobinage.
